Europäisches Patentamt

(19) European Patent Office

Office européen des brevets

(11) Veröffentlichungsnummer: **0 380 566 B1**

(12) **EUROPÄISCHE PATENTSCHRIFT**

(45) Veröffentlichungstag der Patentschrift:
03.07.91 Patentblatt 91/27

(51) Int. Cl.⁵: **B01D 53/34, F23G 5/00**

(21) Anmeldenummer: **88908951.2**

(22) Anmeldetag: **15.10.88**

(86) Internationale Anmeldenummer:
**PCT/EP88/00927**

(87) Internationale Veröffentlichungsnummer:
**WO 89/03241 20.04.89 Gazette 89/09**

(54) **VERFAHREN ZUR BESEITIGUNG VON ABFÄLLEN DURCH VERBRENNEN MIT SAUERSTOFF.**

(30) Priorität: **16.10.87 DE 3735061**
**23.04.88 DE 3813817**

(43) Veröffentlichungstag der Anmeldung:
**08.08.90 Patentblatt 90/32**

(45) Bekanntmachung des Hinweises auf die Patenterteilung:
**03.07.91 Patentblatt 91/27**

(84) Benannte Vertragsstaaten:
**AT BE CH DE FR GB IT LI LU NL SE**

(56) Entgegenhaltungen:
**EP-A- 0 023 642**
**EP-A- 0 103 881**
**EP-A- 0 207 924**

(56) Entgegenhaltungen:
**WO-A-86/07602**
**WO-A-88/04752**
**DE-A- 3 617 410**
**GB-A- 2 169 887**

(73) Patentinhaber: **Fischer, Reinhard**
**Teichstrasse 14**
**W-5100 Aachen (DE)**

(72) Erfinder: **FISCHER, Reinhard**
**Teichstrasse 14**
**W-5100 Aachen (DE)**
Erfinder: **MENGES, Georg**
**An Beulardstein 19**
**W-5100 Aachen-Laurensberg (DE)**

(74) Vertreter: **von Kreisler, Alek, Dipl.-Chem. et al**
**Deichmannhaus am Hauptbahnhof**
**W-5000 Köln 1 (DE)**

## Beschreibung

In der Industrie, in Haushalten und beim Wiederaufarbeiten von Sekundärvorstoffen fallen Materialien an, die einen verhältnismäßig hohen Heizwert haben und deren Verbrennung sich zur Volumenreduktion anbietet. Bei der Verbrennung können auch häufig Probleme des Grundwassers beseitigt oder Sondermülldeponien entlastet werden.

Es sind verschiedene Verfahren zur Verbrennung von Müll und anderen Abfällen bekannt, so daß diese hier nicht näher beschrieben werden müssen. Bei diesen Prozessen wird mit Luft verbrannt.

Aus der EP-A-0 207 924 ist ein Verfahren zur Verbrennung von verbrennbaren Stoffen, auch Müll, mit erhöhtem Sauerstoffgehalt der zugeführten Luft, vorzugsweise 30% bis 35% im Vergleich zum normalen Sauerstoffgehalt der Luft mit 23,19 Gew.-%, bekannt.

Die EP-A-0 103 881 behandelt ein Verfahren zum Abscheiden von gasförmigen Schadstoffen aus Abgasen durch eine dem Verbrennungsofen nachgeschaltete Reinigungsstufe mit Additivmengen wie Kalk oder Calciumcarbonat, die WO 86/07602 setzt zum gleichen Ziel pulverförmige Additive aus Dicalciumphosphat und Ammoniumchlorid mit geringen Gehalten anderer Chemikalien dem Verbrennungsprozeß zu, ohne daß dabei geeignete Temperaturbereiche angegeben werden.

Die EP-A-0 023 642 schlägt ein Gemisch aus Rotschlamm mit Erdalkali- und Aluminiumhydroxid als in den Abgasstrom einzugebendes Adsorptionsmittel bei einer Reaktionstemperatur von ca. 300°C vor, die GB-A-2,169,887 bläst bei 800 bis 1000°C pulverisierte Alkalien bzw. Erdalkalien bzw. deren Oxide und Carbonate in den Verbrennungsofen und getrennt davon Wasser bzw. Dampf in den Ofen oder in den Abgasstrom.

Bei allen Verbrennungsprozessen treten Abgase auf, in denen neben schädlichem Staub auch schädliche Gase enthalten sind. So entsteht z.B. aus der Verbrennung von PVC Salzsäure und bei chlorierten bzw. fluorierten Kohlenwasserstoffen können gefährliche chemische Verbindungen auftreten, wenn bei der Verbrennung nicht besondere Bedingungen eingehalten werden.

Bei Verbrennung mit Luft ist häufig ein größerer Luftüberschuß zur restlosen Verbrennung erforderlich.

Außerdem ist wegen der niedrigen Temperaturen im eigentlichen Brennraum zum restlosen Ausbrennen eine Nachverbrennung erforderlich, in der noch zusätzlich Brennstoff verbraucht wird, der die Rauchgasmenge erhöht. Entsprechend groß und teuer sind die nachgeschalteten Wärmerückgewinnungs- und Abgasreinigungsanlagen.

Wenn auch die Konzentration an Schadstoffen in derartig gereinigten Abgasen niedrig ist, so sind doch wegen der großen Volumenströme auch die Massenströme der schädlichen Stoffe verhältnismäßig groß.

Es ist auch schon vorgeschlagen worden, zur Verbesserung der Verbrennung mit sauerstoffangereicherter Verbrennungsluft zu fahren, so z.B. für die Verbrennung von Müll vom Shreddern von Autos (Wilhelm C. Dries-Recycling Berlin 1979, S. 1447).

Eine drastische Verringerung der Abgasmengen tritt jedoch erst ein, wenn eine Verbrennungsluft mit wenigstens 50% Sauerstoff, am besten jedoch reiner Sauerstoff mit 99% $O_2$ zum Verbrennen genommen wird.

Diese sehr große Reduktion der Abgasmenge sei am Beispiel der Ölverbrennung deutlich gemacht. Bei der Verbrennung von 1 kg Heizöl EL entstehen bei einer Luftüberschußzahl von 1,2 ca. 13 $Nm^3$ Rauchgase, dagegen beim Verbrennen mit Sauerstoff nur ca. 3,2 $Nm^3$, d.h. eine Reduktion auf 1/4. Entsprechend verringern sich Größe und Kraftbedarf der Gasreinigungsanlagen.

Es hat sich nun gezeigt, daß beim Verbrennen von Kunststoffen, wie Polypropylen, PVC oder dergl., wie sie beim Aufarbeiten von alten Autobatterien nach dem Verfahren der deutschen Patentanmeldung P 36 17 410.6, das in großtechnischem Maßstab seit längerer Zeit betrieben wird, zum Einsatz kommen, eine vollständige und rußfreie Verbrennung mit Sauerstoff möglich ist, wenn gewisse Verweilzeiten im Verbrennungsofen eingehalten werden.

Das erfindungsgemäße Verfahren umfaßt mehrere Schritte, bei denen Abfälle, insbesondere kunststoffhaltige Abfälle zur Verringerung der Abgasmenge – gleichbedeutend mit kleineren Abgasreinigungsanlagen, geringerem Kraftbedarf und reduziertem Schadstoffauswurf – und zur Erhöhung der Flammentemperatur mit Verbrennungsgasen mit über 50% Sauerstoff verbrannt werden.

Die Abgase werden in einem Abhitzekessel gekühlt und in einer Gasreinigungsanlage gereinigt.

Die theoretisch möglicherweise sehr hohe Brennraumtemperatur wird entweder durch Herabsetzung des Heizwertes des Aufgabegutes oder durch Rückführung eines Teiles der im Abhitzekessel abgekühlten Rauchgase in den Brennraum auf Temperaturen unter 1800°C gesenkt.

Der anfallende Dampf wird z.B. für betriebliche Zwecke verwendet.

Zur Bindung bei der Verbrennung etwa entstehender schädlicher Stoffe werden metallhaltige Stoffe mitverbrannt oder diese, oder auch Alkali- oder Erdalkali-Verbindungen, dem Abgasstrom zugeführt, die die Schadstoffe binden.

Dieses Verfahren ist besonders für die Verwertung alter Automobile geeignet. Dabei werden beim Shreddern anfallender Müll, der aus Gummi, Kunststoffen u.a. besteht, und anfallende NE-Metalle mit Sauerstoff verbrannt und der anfallende Dampf für betriebliche Zwecke benutzt. Die in einem filternden Abscheider anfallenden, metallhaltigen Stäube werden der Metallgewinnung zugeführt oder in die im Brennraum anfallende Schlacke eingebunden.

Dementsprechend betrifft die vorliegende Erfindung ein Verfahren zur Beseitigung von Abfällen, das durch die folgende Kombination von Schritten gekennzeichnet ist :

a) Verbrennung von brennbaren, festen, pastösen oder flüssigen Müll-Materialien in einer Verbrennungsanlage mit einem Verbrennungsgas, das mindestens 50% Sauerstoff enthält, wobei NE-Metalle und/oder NE-Metallverbindungen und/oder NE-Metall-Oxide und/oder Alkali-Verbindungen und/oder Erdalkali-Verbindungen vorhanden sind oder durch Verbrennen mit den Müll-Materialien entstehen und/oder durch Einschleusen entsprechender Verbindungen in die Verbrennungsanlage zusammen mit dem Aufgabegut der Müll-Materialien oder in den heißen Gasstrom-Zugesetzt werden, und gegebenenfalls unter Zugabe von Zuschlägen zum Aufgabegut zur Steuerung der Schlackenzusammensetzung ;

b) Absenken der Brennraumtemperatur in den Bereich von 1200 bis 1800°C ;

c) Kühlung der Abgase in einem Abhitzekessel und Gewinnung der Abwärme ;

d) Abscheiden entstandener Stäube in einer Gasreinigungsanlage und

e) Ausschleusen nicht brennbarer, nicht flüchtiger Rückstände in Form einer Schlacke.

Die Verbrennung der Müll-Materialien z.B. von Hausmüll, Sonderabfällen, Shredderschutt, Altöl und anderen erfolgt in einem geeigneten Ofen, insbesondere in einem Drehrohrofen. Bevorzugt enthält das Verbrennungsgas 70 bis 98% Sauerstoff und insbesondere 98 und mehr % Sauerstoff.

Als NE-(Nichteisen)-Metalle, NE-Metallverbindungen und NE-Metalloxide seien beispielhaft Blei, Zink, Zinn, Kupfer sowie die Sulfate, Carbonate und Oxide dieser Metalle genannt. Als Alkali-Verbindungen und Erdalkali-Verbindungen seien beispielsweise die Carbonate und Sulfate von Natrium, Kalium, Calcium und Magnesium genannt. Die Menge an geeigneten NE-Metallen oder NE-Metall-Verbindungen oder an Alkalien oder Erdalkalien und ihren Verbindungen soll so gewählt werden, daß Flugstäube mit vorzugsweise unter 10% Halogen, insbesondere unter 10% Chlor + Fluor entstehen.

Die Verweilzeit in der Verbrennungsanlage bzw. in den Öfen und insbesondere den Drehrohröfen sollte mindestens 1 sec betragen.

Das Absenken der Brennraumtemperatur in Stufe b) erfolgt durch Absenken des Heizwertes des Aufgabematerials und/oder durch Rückführung abgekühlter Rauchgase und/oder durch direkte und/ oder indirekte Brennraumkühlung.

Die Kühlung der Abgase aus den Stufen a) und b) und die Gewinnung der Abwärme erfolgt in einem Abhitzekessel, vorzugsweise in einem Abhitzekessel mit Strahlungsheizfläche und insbesondere einem Abhitzekessel mit vorgeschalteter Strahlungsheizfläche.

Der aus dem Abhitzekessel anfallende Dampf kann zur Stromerzeugung und/oder unmittelbar zum Antrieb von Aggregaten, beispielsweise zum Antrieb der Sauerstoffgewinnungsanlage und/oder des Shredders verwendet werden. Auch kann der Dampf für andere Anlagen im Bereich der Müllverbrennungsanlage eingesetzt werden oder an Dritte abgegeben werden.

Von besonderem Vorteil ist bei vorliegender Erfindung, daß man Nicht-Eisen-Metalle und insbesondere Schwermetalle aus den Müll-Materialien nicht aussortieren muß, sondern daß man sich gerade ihre Anwesenheit zunutze macht, damit sie bei der Verbrennung zu den entsprechenden Oxiden umgewandelt und zur Bindung etwaiger vorhandener Säuren oder anderer chemischer Verbindungen ausgenutzt werden. Je nach Beschaffenheit der Müll-Materialien enthalten diese schon von Haus aus eine ausreichende Menge an NE-Metallen und/oder NE-Metall-Verbindungen und/oder NE-Metall-Oxiden und/oder Alkali-Verbindungen und-/oder Erdalkali-Verbindungen. Falls keine ausreichende Menge dieser Stoffe vorliegt oder sie überhaupt nicht in zur Entsorgung anfallenden Müll-Materialien vorhanden sind, werden diese Stoffe entweder dem Aufgabegut, d.h. den Müll-Materialien zugesetzt oder bei der Verbrennung in den heißen Gasstrom eingeschleust.

Einen Teil der Rauchgase kann man nach Abkühlung im Abhitzekessel in den Brennraum der Verbrennungsanlage zurückführen, um die Brennraumtemperatur herabzusetzen.

Die nicht zurückgeführten Rauchgase werden in einer Gasreinigungsanlage gereinigt, wobei die entstandenen Stäube abgeschieden werden. Dies geschieht vorzugsweise über Gewebefilter. Gegebenenfalls können den Gewebefiltern noch Hochleistungsfeinfilter nachgeschaltet werden.

Wenn die Metallgehalte in den abgeschiedenen Stäuben hoch genug sind, um eine Verwertung sinnvoll zu machen, kann man die abgeschiedenen Stäube zur Metallgewinnung verwenden. Sind die Metallgehalte in den abgeschiedenen Stäuben zu niedrig für eine Metallgewinnung, so führt man die Stäube entweder in den Brennraum zur Anreicherung oder zum Einbinden in die erzeugte Ofenschlacke zurück.

Die nicht brennbaren, nicht flüchtigen Rückstände in der Verbrennungsanlage werden in Form einer Schlacke, der gegebenenfalls zur Verflüssigung geeignete bekannte Zuschläge zugesetzt worden sind, aus-

3

geschleust. Als Schlackenbildner und zur mineralischen Bindung von Schadstoffen werden geeignete Stoffe dem Aufgabegut der Müll-Materialien zugegeben. Diese Zuschläge sind dem Hüttenmann geläufig und sind z.B. Eisen, Kalk, Tonerde, Kieselsäure und andere übliche schlackenbildende Stoffe.

Die Verbrennung mit Sauerstoff bedeutet, daß kalorimetrische Flammentemperaturen bis über 2000°C erreicht werden, bei denen Kohlenwasserstoffverbindungen nicht mehr beständig sind.

Ein Problem stellen die bei der Verbrennung bestimmter Kunststoffe möglicherweise entstehende Salzsäure, Flußsäure, Schwefelsäure oder dergl. dar. Aus metallurgischen Prozessen ist bekannt, daß Metalloxide ein hervorragendes Mittel sind, derartige Säuren zu binden. Das ist insbesondere der Fall, wenn diese Oxide beim Verbrennungsprozeß entstehen. So fällt z.B. bei der Autobatterie-Verarbeitung ein Flugstaub mit bis zu 10% Cl in Form von Bleichlorid an. Aber auch andere Metalloxide, wie Zinkoxid sind dafür sehr gut geeignet. Sind nicht ausreichend Metalloxide vorhanden oder können auf andere Weise in den Gasstrom eingebracht werden, so ist eine Bindung der Chloride und Fluoride auch an in den Gasstrom eingebrachten Alkali- oder Erdalkali-Verbindungen möglich. Dabei sollte ein möglichst langer Kontakt zwischen Gas und Staub angestrebt werden, was sich z.B. durch Staubrückführung im Filter bewirken läßt.

Die beim Verbrennen freiwerdende Wärme kann in einem Abhitzekessel in Dampf umgewandelt werden. Abhitzekessel für staubhaltige Gase sind bekannt, bei den zum Kleben neigenden Chlor- bzw. Fluor-haltigen Flugstäuben müssen besondere Vorkehrungen getroffen werden.

Das beschriebene Verfahren ist besonders für Anlagen zum Shreddern von Autos geeignet. Der beim Shreddern anfallende, brennbare Müll, der aus Kunststoffen, Textilien, Holz, Gummi u.a. besteht, könnte umittelbar neben der Shredderanlage in einem geeigneten Ofen verbrannt werden. Dem brennbaren Müll werden von der nichtmagnetischen Fraktion an NE-Metallen < 25 mm soviel zugegeben, daß ausreichend Metalloxide im Rauchgas zur Bindung etwaiger Säuren vorhanden sind, oder aber der in der Gasreinigungsanlage abgeschiedene Flugstaub wird in den Ofen zurückgeführt.

Metallhaltiger Flugstaub kann bis zum Erreichen verwertbarer Metallgehalte zur Anreicherung in den Verbrennungsofen zurückgeführt werden. Kann der Flugstaub nicht anderweitig verwendet werden, wird er in den Verbrennungsofen zurückgeführt und in die dort anfallende Schlacke eingebunden. Dadurch werden Schadstoffe mineralisiert.

Durch die hohe Brennraumtemperatur werden die festen Rückstände des Aufgabematerials als flüssige Schlacke ausgetragen. Für die Verflüssigung der Schlacke und zur Mineralisation schädlicher Bestandteile können dem Aufgabegut Schlackenbildner beigegeben werden.

Beim Verbrennen von Abfällen mit höheren Heizwerten als 8000 kJ/kg, z.B. beim Verbrennen von Shredderschutt mit ca. 15000 bis 18000 kJ/kg, und bei Sauerstoffgehalten in der Verbrennungsluft über 50% und der dadurch bedingten Rauchgasmenge, ergeben sich Verbrennungstemperaturen bis zu 2500°C.

Die Brennraumtemperatur kann nun dadurch gesenkt werden, daß entweder der Brennwert des Aufgabegutes gesenkt oder eine bestimmte Rauchgasmenge nach Abkühlung im Abhitzekessel in den Brennraum zurückgeführt wird.

Die Rauchgasrückführung hat den Vorteil, daß sich dabei zwar die im Abhitzekessel abzukühlende Gasmenge erhöht, die zu reinigende Abgasmenge und die Reingasmenge, die die Schadstoffemission der Anlage bestimmt, aber klein bleiben.

Der im Abhitzekessel anfallende Dampf wird entweder in elektrischen Strom umgewandelt und zum Betrieb der Anlage oder zur Abgabe an Dritte verwendet oder als Dampf unmittelbar zum Betreiben von Maschinen der Sauerstoffgewinnungsanlage oder der Shredderanlage benutzt.

Die Rauchgase, die nach dem Abhitzekessel nicht in den Brennraum zurückgeführt werden, werden in einer Gasreinigungsanlage, vorzugsweise in einem Gewebefilter, gereinigt. Wegen der verhältnismäßig geringen Abgasmenge, und falls besonders hohe Anforderungen an das Reingas gestellt werden, läßt sich dem Gewebefilter, das Reingaswerte mit einem Staubgehalt von kleiner als 5 mg/Nm³ erreicht, noch ein Hochleistungs-Feinfilter nachschalten, das Reingasstaubgehalte von unter 0,1 mg/Nm³ ermöglicht.

Ein weiterer besonderer Vorteil des erfindungsgemäßen Verfahrens liegt darin, daß Müll verschiedener Herkunft, beispielsweise Hausmüll plus Industriemüll plus Sonderabfälle, gemeinsam gleichzeitig in einer Anlage verbrannt werden kann. Bisher hat man die verschiedenen Müllarten getrennt verbrannt.

Das Verfahren sei an nachstehenden Beispielen erläutert:

Verbrennen von Hausmüll und Sonderabfällen im Drehrohrofen.

Da die Verbrennung bei Temperaturen über 1200°C, vorzugsweise bei 1500-1800°C erfolgt, und die Innenwand des Drehrohrofens ebenfalls diese Temperatur erreicht, braucht eine Trennung nach Hausmüll, Industriemüll und Sonderabfällen nicht zu erfolgen.

Müll wird nach der üblichen Grobzerkleinerung dem Drehrohrofen aufgegeben.

Flüssige, brennbare Abfallstoffe werden über einen Sauerstoffbrenner eingedüst. Ihre Verbrennung dient als Stützflamme.

Sauerstoff, der in einer Luftzerlegungsanlage erzeugt wird, wird in den Drehrohrofen eingeblasen. Eine Zwischenverflüssigung ist nicht erforderlich.

Bei der Verbrennung entstehen nur ca. 1/3 der Rauchgase, die bei der Verbrennung mit Luft zu erwarten sind, da der Stickstoffballast – 79% des Luftvolumens – fehlt.

Da die Flammentemperatur bei der Verbrennung mit Sauerstoff Werte von über 2500°C erreichen kann, wird Rauchgas nach Abkühlung im Wärmetauscher (Abhitzekessel) in der Menge in den Brennraum zurückgeführt, die für die Einstellung einer wirtschaftlichen Brennraumtemperatur erforderlich ist.

Mit den heute zur Verfügung stehenden feuerfesten Materialien sind Brennraumtemperaturen von über 1500°C möglich.

Stickoxide entstehen praktisch nicht, da Luft nur als Zerstäubungspreßluft für die flüssigen Stoffe und geringe Mengen Falschluft in das System gelangen. Außerdem kann Stickstoff in geringen Mengen in den zu verbrennenden Kunststoffen enthalten sein.

Zur Bindung der evtl. bei der Verbrennung freiwerdenden Halogenide werden der Beschickung geeignete Additive, z.B. Kalkhydrat zugegeben, soweit dafür geeignete Stoffe im Aufgabegut nicht enthalten sind. Diese werden mitverbrannt oder in den heißen Gasstrom zugegeben. Durch Zugabe der Additive im heißen Bereich werden sehr hohe Reaktionsgeschwindigkeiten bei der Bindung der Schadstoffe erreicht.

Die heißen Gase gelangen in den Abhitzekessel. Ein Teil der Rauchgase wird nach Abkühlung in den Brennraum zurückgeführt.

Wegen der hohen Temperatur wird der Abhitzekessel vorzugsweise mit einer Strahlungsheizfläche ausgelegt werden, die gleichzeitig als Gasumlenk- und Prallfläche zum Abscheiden mitgerissener Schlacketeilchen dienen kann.

Die abgekühlten Rauchgase werden in einem Gewebefilter entstaubt. Je nach gewähltem Filtermedium sind dabei Temperaturen von 180-250°C möglich.

Bei den bisher üblichen Verfahren muß mit einer Abgasmenge von ca. 5500 Nm³/t Müll gerechnet werden, das entspricht bei einer Anlage mit einer Leistung von 15 t/h 82500 Nm³/h. Bei den heute mit guten Gewebefiltern erreichbaren Reingasstaubgehalten von ca. 4 mg/Nm³ ist das ein Massenstrom von 330 g/h.

Demgegenüber beträgt die zu reinigende Abgasmenge beim Verbrennen mit Sauerstoff gemäß der Erfindung einschließlich Falschluft nur ca. 28000 Nm³/h. Bei gleichen Reingaswerten bedeutet das eine Senkung des Massenstroms an Schadstoffen auf nur 110 g/h.

Die im Abhitzekessel und Gewebefilter abgeschiedenen Schadstoffe werden in den Drehrohrofen zurückgeführt und in die Schlacke eingebunden.

Eine Gaswäsche ist nicht erforderlich, da die Halogene an die Additive gebunden werden.

Das Aufgabematerial des Drehrohrofens wird mit evtl. erforderlichen Zuschlagstoffen versehen, so daß die Verbrennungsrückstände und die rückgeführten Flugstäube flüssig ausgetragen werden können und eine Mineralisation etwaiger Schadstoffe in eine wasserunlösliche Form stattfindet. Dadurch wird eine einfache Deponie oder aber auch eine Weiterverwendung möglich. Die zurückgewonnene Wärmeenergie wird zur Erzeugung des benötigten Sauerstoffs verwendet bzw. an andere Verbraucher abgegeben.

## Auslegedaten

| | | |
|---|---|---|
| Mülldurchsatz | 15 | t/h |
| Heizwert | 11000 | kJ/h |
| Feuchtigkeit | 30 | % $H_2O$ |
| Schlackenanfall | 4,5 | t/h |
| Sauerstoffverbrauch | 1 | kg $O_2$/kg Müll |

## Drehrohrofen

| | | |
|---|---|---|
| Abmessung | 48 m Länge x 3,5 m innerer Durchmesser | |
| Rauchgasmenge | 15600 | $Nm^3$/h |
| Rauchgasrückführung | 35000 | $Nm^3$/h |
| Gasmenge Eintritt Abhitzekessel | 50600 | $Nm^3$/h |
| Temperatur | 1800 | °C |

## $O_2$-Anlage

| | | |
|---|---|---|
| Leistung | 10500 | $Nm^3$/h |
| Platzbedarf | 40 x 50 | m |
| Kraftbedarf | 4,9 | MW |
| Kühlwasser | 500 | $m^3$/h |

## Abhitzekessel

| | | |
|---|---|---|
| Heizfläche | 850 | $m^2$ |
| Dampfmenge | 54 | t/h |
| Dampfdruck | 16 | bar |

## Gewebefilter

| | | |
|---|---|---|
| Gasmenge | 28000 | $Nm^3$/h |
| Eintrittstemperatur | 180 | °C |
| Filterfläche | 800 | $m^2$ |
| Reingasstaubgehalt | 5 | mg/$Nm^3$ |

Verbrennen von Shredderschutt im Drehrohrofen.

Das Verfahren unterscheidet sich nur dadurch vom Verbrennen von Hausmüll u. dergleichen, daß der Heizwert wesentlich höher ist.

Der Shredderschutt enthält im allgemeinen soviel NE-Metall, bzw. können in ihm belassen werden, wie zur Bindung der bei der Verbrennung entstehenden Chloride und Fluoride erforderlich sind. Eine Alkali- oder Erdalkali-Zugabe erübrigt sich daher.

Es kann damit gerechnet werden, daß die abgeschiedenen Flugstäube wegen ihrer Metallgehalte einer Metallgewinnung zugeführt werden können.

6

<u>Auslegedaten</u>

| Shreddermülldurchsatz | 5 | t/h |
| Heizwert | 15000 | kJ/h |
| Feuchtigkeit | 5 | % $H_2O$ |
| Schlackenanfall | 1,75 | t/h |
| Sauerstoffverbrauch | 1,4 | kg $O_2$/kg Müll |

<u>Drehrohrofen</u>

| Abmessung | 30 m Länge x 3,2 m innerer Durchmesser | |
| Rauchgasmenge | 4800 | $Nm^3$/h |
| Rauchgasrückführung | 20300 | $Nm^3$/h |
| Gasmenge Eintritt Abhitzekessel | 25100 | $Nm^3$/h |
| Temperatur | 1800 | °C |

$O_2$-Anlage

| Leistung | 5000 | $Nm^3$/h |
| Platzbedarf | 30 x 20 | m |
| Kraftbedarf | 2,4 | MW |

<u>Abhitzekessel</u>

| Heizfläche | 430 | $m^2$ |
| Dampfmenge | 25 | t/h |
| Dampfdruck | 16 | bar |

<u>Gewebefilter</u>

| Gasmenge | 10000 | $Nm^3$/h |
| Eintrittstemperatur | 180 | °C |
| Filterfläche | 270 | $m^2$ |
| Reingasstaubgehalt | 5 | mg/$Nm^3$ |

Wie im einzelnen ausgeführt, werden beim Verfahren gemäß der Erfindung bei der Verbrennung metallhaltige Stoffe mitverbrannt, deren Verbrennungsprodukte in der Lage sind, etwaige bei der Verbrennung entstehende Schadstoffe zu binden.

Weiterhin können dem Abgasstrom zur Bindung von Schadstoffen Alkali- und/oder Erdalkaliverbindungen zugeführt werden. Die Abgase können nach Abkühlung in einem Abhitzekessel in einem filternden Entstauber mit Staubrückführung oder in einer anderen geeigneten Anlage gereinigt werden. Ferner kann man das erzeugte Rauchgas nach Abkühlung in einem Wärmetauscher in den Brennraum in der Menge zurückführen, wie es für die Erreichung der gewünschten Brennraumtemperatur erforderlich ist.

Beispielsweise werden beim Betreiben von Auto-Shredderanlagen die brennbaren und ein Teil oder alle NE-Metall-haltigen Bestandteile der Autowracks, nach Anscheidung in der Shredderanlage einer Anlage zugeführt, in der sie mit mindestens 50%, vorzugsweise 70% bis 98% und mehr Sauerstoff im Verbrennungsgas verbrannt werden, wobei das Abgas nach Abkühlung in einem Abhitzekessel in einer geeigneten Gasreinigungsanlage, vorzugsweise einem filternden Abscheider, gereinigt wird und der Dampf des Abhitzekessels in der Shredderanlage, vorzugsweise direkt über eine Turbine zum Antrieb des Shredders, Verwendung findet.

## Ansprüche

1. Verfahren zur Beseitigung von Abfällen, gekennzeichnet durch die folgende Kombination von Schritten:
a) Verbrennung von brennbaren, festen, pastösen oder flüssigen Müll-Materialien in einer Verbrennungsanlage mit einem Verbrennungsgas, das mindestens 50% Sauerstoff enthält, wobei NE-Metalle und/oder NE-Metallverbindungen und/oder NE-Metall-Oxide und/oder Alkali-Verbindungen und/oder Erdalkali-Verbindungen vorhanden sind, oder durch Verbrennen mit den Müll-Materialien entstehen und/oder durch Einschleusen entsprechender Verbindungen in die Verbrennungsanlage zusammen mit dem Aufgabegut der Müll-Materialien oder in den heißen Gasstrom Zugesetzt werden, und gegebenenfalls unter Zugabe von Zuschlägen zum Aufgabegut zur Steuerung der Schlackenzusammensetzung ;
b) Absenken der Brennraumtemperatur in den Bereich von 1200 bis 1800°C ;
c) Kühlung der Abgase in einem Abhitzekessel und Gewinnung der Abwärme ;
d) Abscheiden entstandener Stäube in einer Gasreinigungsanlage und
e) Ausschleusen nicht brennbarer, nicht flüchtiger Rückstände in Form einer Schlacke.
2. Verfahren nach Anspruch 1, dadurch gekennzeichnet, daß in Stufe a) die Verbrennung in einem geeigneten Ofen, insbesondere einem Drehrohrofen erfolgt.
3. Verfahren nach Ansprüchen 1 und 2, dadurch gekennzeichnet, daß das Verbrennungsgas 70 bis 98% Sauerstoff, vorzugsweise 98% und mehr Sauerstoff enthält.
4. Verfahren nach Ansprüchen 1 bis 3, dadurch gekennzeichnet, daß die Verweilzeit in der Verbrennungsanlage mindestens 1 sec beträgt.
5. Verfahren nach Anspruch 1 bis 4, dadurch gekennzeichnet, daß die Absenkung der Brennraumtemperatur in Stufe b) durch Absenken des Heizwertes des Aufgabematerials und/oder durch Rückführung abgekühlter Rauchgase und/oder durch direkte und/oder indirekte Brennraumkühlung erfolgt.
6. Verfahren nach Anspruch 1 bis 5, dadurch gekennzeichnet, daß die Gewinnung der Abwärme gemäß Stufe c) in einem Abhitzekessel, vorzugsweise einem Abhitzekessel mit Strahlungsheizfläche, und insbesondere in einem Abhitzekessel mit vorgeschalteter Strahlungsheizfläche erfolgt.
7. Verfahren nach Ansprüchen 1 bis 6, dadurch gekennzeichnet, daß die in Stufe c) gewonnene Abwärme zum Antrieb von Aggregaten verwendet wird.
8. Verfahren nach Ansprüchen 1 bis 7, dadurch gekennzeichnet, daß die Menge der NE-Metalle, NE-Metallverbindungen, NE-Metalloxide, Alkali-Verbindungen oder Erdalkali-Verbindungen so gewählt wird, daß Flugstäube mit vorzugsweise unter 10% Halogen, insbesondere Chlor + Fluor, entstehen.
9. Verfahren nach Anspruch 1 bis 8, dadurch gekennzeichnet, daß zur Abscheidung der Stäube in Stufe d) ein Gewebefilter verwendet wird, gegebenenfalls mit nachgeschaltetem Hochleistungsfeinfilter.
10. Verfahren nach Ansprüchen 1 bis 9, dadurch gekennzeichnet, daß man bei verwertbaren Metallgehalten in den abgeschiedenen Stäuben diese zur Metallgewinnung einsetzt oder bei niedrigen Metallgehalten in den abgeschiedenen Stäuben diese entweder in den Brennraum zur Anreicherung oder zum Einbinden in die erzeugte Ofenschlacke zurückführt.
11. Verfahren nach Ansprüchen 1 bis 10, dadurch gekennzeichnet, daß man dem Aufgabegut als Zuschläge Schlackenbildner wie Eisen, Kalk, Tonerde und Kieselsäure zugibt.
12. Verfahren nach den Ansprüchen 1 bis 11, dadurch gekennzeichnet, daß man einen Teil der Rauchgase nach Abkühlung im Abhitzekessel in den Brennraum der Verbrennungsanlage zurückführt.
13. Verfahren nach den Ansprüchen 1 bis 12, dadurch gekennzeichnet, daß man Hausmüll und Industriemüll und Sonderabfälle gemeinsam gleichzeitig in einer Verbrennungsanlage verbrennt.

## Claims

1. A process for the disposal of refuses, characterized by the following combination of steps :
a) Combustion of combustible solid, pasty or liquid waste materials in a combustion plant with a combustion-supporting gas containing at least 50% of oxygen, whereby nf metals and/or nf metal compounds and/or nf metal oxides and/or alkali compounds and/or alkaline earth compounds are present or are formed due to a combustion together with the waste materials and/or are added by way of an introduction of adequate compounds into the combustion plant together with the feedstock of waste materials or into the hot gas stream and, optionally, with addition to the feedstock of fluxes for controlling the composition of the slag ;

b) reducing the temperature within the combustion chamber to the range of from 1200°C to 1800°C ;

c) cooling the flue gases in a waste heat boiler and recovery of the waste heat ;

d) removal of produced dust in a gas cleaning unit ; and

e) discharging non-combustible non-volatile residues in form of a slag.

2. The process according to claim 1, characterized in that in step a) the combustion is effected in a suitable furnace, especially in a rotary kiln.

3. The process according to claims 1 and 2, characterized in that the combustion gas contains from 70 to 98% of oxygen, and preferably 98% and more of oxygen.

4. The process according to claims 1 to 3, characterized in that the retention time in the combustion plant is at least one second.

5. The process according to claims 1 to 4, characterized in that the reduction of the temperature within the combustion chamber in step b) is effected by reducing the calorific value of the feedstock and/or by recirculation of cooled flue gases and/or by direct and/or indirect cooling of the combustion chamber.

6. The process according to claims 1 to 5, characterized in that the waste heat recovery according to step c) is effected in a waste heat boiler, preferably a waste heat boiler having a radiation-heating surface, and especially a waste heat boiler having an upstream radiation-heating surface.

7. The process according to claims 1 to 6, characterized in that the waste heat recovered in step c) is used for operating machine units.

8. The process according to claims 1 to 7, characterized in that the quantities of nf metals and/or nf metal compounds and/or nf metal oxides and/or alkali compounds and/or alkaline earth compounds are chosen so that flue dusts are formed which preferably contain less than 10% of halogen, and specifically chlorine + fluorine.

9. The process according to claims 1 to 8, characterized in that a fabric filter is used for the removal of dust in step d), optionally followed by a high-performance fine filter.

10. The process according to claims 1 to 9, characterized in that, in the case of utilizable metal contents in the removed flue dust, said flue dust is employed for a metal recovery or, in the case of low metal contents in the removed flue dust, said flue dust is recycled either to the combustion chamber for enrichment or to be included in the produced slag.

11. The process according to claims 1 to 10, characterized in that slag-forming fluxes such as iron, lime, alumina and silica are added to the feedstock.

12. The process according to claims 1 to 11, characterized in that part of the flue gases, after cooling in the waste heat boiler, is recirculated into the burning chamber of the combustion plant.

13. The process according to claims 1 to 12, characterized in that private garbage, industrial waste and special hazardous refuse are simultaneously subjected to combustion together in one combustion plant.

## Revendications

1. Procédé pour éliminer des déchets, caractérisé par la combinaison des étapes suivantes :

a) Incinération d'ordures combustibles, solides, pâteuses ou liquides, dans une installation d'incinération à l'aide d'un gaz de combustion contenant au moins 50% d'oxygène, des métaux non ferreux et/ou des composés de métaux non ferreux et/ou des oxydes de métaux non ferreux et/ou des composés de métaux alcalins et/ou des composés de métaux alcalino-terreux étant présents ou étant formés par combustion avec les déchets et/ou étant ajoutés par introduction des composés correspondants dans l'installation d'incinération, avec le chargement de déchets ou dans le courant de gaz chaud, et éventuellement avec addition d'additifs au chargement pour réguler la composition des scories ;

b) Abaissement de la température de la chambre de combustion jusque dans l'intervalle de 1200 à 1800°C;

c) Refroidissement des gaz d'évacuation dans une chaudière de récupération, et récupération des chaleurs perdues ;

d) Séparation des poussières formées, dans une installation d'épuration des gaz, et

e) Extraction, sous forme de scories, des résidus non combustibles et non volatils.

2. Procédé selon la revendication 1, caractérisé en ce que, dans l'étape a), l'incinération est réalisée dans un four approprié, notamment un four tubulaire tournant.

3. Procédé selon les revendications 1 et 2, caractérisé en ce que le gaz de combustion contient 70 à 98% d'oxygène, de préférence 98% d'oxygène et plus.

4. Procédé selon les revendications 1 à 3, caractérisé en ce que le temps de séjour dans l'installation d'incinération est d'au moins 1 seconde.

5. Procédé selon les revendications 1 à 4, caractérisé en ce que l'abaissement de la température de la chambre de combustion dans l'étape b) est réalisé par diminution du.pouvoir calorifique du matériau de chargement et/ou par un recyclage des fumées refroidies et/ou par un refroidissement direct et/ou indirect de la chambre de combustion.

6. Procédé selon les revendications 1 à 5, caractérisé en ce que la récupération des chaleurs perdues selon l'étape c) a lieu dans une chaudière de récupération, de préférence une chaudière de récupération comportant une surface chauffante par rayonnement, et en particulier dans une chaudière de récupération en amont de laquelle se trouve une surface chauffante par rayonnement.

7. Procédé selon les revendications 1 à 6, caractérisé en ce que les chaleurs perdues récupérées dans l'étape c) sont utilisées pour actionner des équipements.

8. Procédé selon les revendications 1 à 7, caractérisé en ce que la quantité des métaux non ferreux, des composés de métaux non ferreux, des oxydes de métaux non ferreux, des composés de métaux alcalins ou des composés de métaux alcalino-terreux est choisie de façon qu'il se forme des poussières volantes contenant de préférence moins de 10% d'halogènes, en particulier de chlore + fluor.

9. Procédé selon les revendications 1 à 8, caractérisé en ce qu'on utilise, pour séparer les poussières dans l'étape d), un filtre texturé, éventuellement suivi d'un filtre fin hautes performances.

10. Procédé selon les revendications 1 à 9, caractérisé en ce que, en présence de teneurs en métaux utilisables dans les poussières séparées, on les utilise pour récupérer des métaux, ou encore, quand les poussières séparées ont de faibles teneurs en métaux, on les recycle dans la chambre de combustion, pour enrichissement ou pour intégration dans le laitier de four ainsi formé.

11. Procédé selon les revendications 1 à 10, caractérisé en ce qu'on ajoute au produit chargé, en tant qu'additifs, des agents de scorification comme du fer, de la chaux, de l'alumine et de la silice.

12. Procédé selon les revendications 1 à 11, caractérisé en ce qu'on recycle dans la chambre de combustion de l'installation d'incinération une partie des fumées après refroidissement dans la chaudière de récupération.

13. Procédé selon les revendications 1 à 12, caractérisé en ce qu'on incinère simultanément, dans une installation d'incinération, des ordures ménagères et des déchets industriels, de même que des déchets spéciaux.